**Europäisches Patentamt**

**European Patent Office**

**Office européen des brevets**

(19)

(11) Veröffentlichungsnummer : **0 520 976 A2**

# (12) EUROPÄISCHE PATENTANMELDUNG

(21) Anmeldenummer : **92890111.5**

(22) Anmeldetag : **11.05.92**

(51) Int. Cl.$^5$ : **G01N 27/30**

(30) Priorität : **27.06.91 AT 1291/91**

(43) Veröffentlichungstag der Anmeldung :
**30.12.92 Patentblatt 92/53**

(84) Benannte Vertragsstaaten :
**DE DK FR GB**

(71) Anmelder : **AVL Medical Instruments AG**
**Stettemerstrasse 28**
**CH-8207 Schaffhausen (CH)**

(72) Erfinder : **Harnoncourt, Karl, Prof. Dr.**
**Rosenberggasse 52**
**A-8010 Graz (AT)**
Erfinder : **Pätzold, Dieter, Dr.**
**Sigmundstadl 18**
**A-8020 Graz (AT)**
Erfinder : **Kleinhappl, Erich, Ing.**
**Weizerstr. 1**
**A-8062 Weinitzen (AT)**

(74) Vertreter : **Krause, Walter, Dr. Dipl.-Ing. et al**
**Postfach 200 Singerstrasse 8**
**A-1010 Wien (AT)**

(54) **Innenelektrode einer polarographischen Elektrode.**

(57)    Bei einer Innenelektrode (1) einer polarographischen Elektrode mit einer elektrisch isolierenden Hülle (2), welche einen Ableitdraht (3) aufnimmt und an der Stirnfläche eine reaktive Oberfläche (4) aufweist, die durch die freien Querschnittsflächen von in der Hülle (2) angeordneten, mit dem Ableitdraht (3) in elektrisch leitender Verbindung stehenden Drähten (5) gebildet ist, wird zur Vereinfachung der Herstellung vorgeschlagen, daß die Drähte (5) und deren Verbindungsstelle mit dem Ableitdraht (3) in eine den Stirnbereich der Hülle (2) ausfüllende Kunststoffmasse (6) eingegossen sind.

Fig. 1

EP 0 520 976 A2

Die vorliegende Erfindung bezieht sich auf eine Innenelektrode einer polarographischen Elektrode mit einer elektrisch isolierenden Hülle, welche einen Ableitdraht aufnimmt und an der Stirnfläche eine reaktive Oberfläche aufweist, die durch die freien Querschnittsflächen von in der Hülle angeordneten, mit dem Ableitdraht in elektrisch leitender Verbindung stehenden Drähten gebildet ist, sowie auf ein Verfahren zur Herstellung einer Innenelektrode.

Die Drähte einer derartigen Innenelektrode sind aus meßtechnischen Gründen möglichst dünn, ihr Durchmesser beträgt z.B. nur 0,01 mm, und verhältnismäßig lang. Weiters müssen sie in der Elektrode glatt, vor allem knickfrei und selbstverständlich unterbrechungslos eingeschmolzen sein sowie einen guten elektrischen Kontakt zum Ableitdraht aufweisen. Wegen dieser Anforderungen und der Feinheit der Drähte, ist die Herstellung derartiger Elektroden schwierig.

Aus der AT-PS 359 750 ist eine Innenelektrode der eingangs genannten Art bekannt geworden, welche folgendermaßen hergestellt wird. Zunächst wird der Ableitdraht und ein runder Glasstab unter Bildung eines halbkugelförmigen Überganges vom dünneren Ableitdraht zum dickeren Glasstab miteinander fest verbunden. An dem eine Stützfläche bildenden Übergang werden nun die feinen Drähte mit dem Ableitdraht elektrisch leitend verbunden, über die halbkugelförmige Stützfläche gebogen und auf dem Glasstab mittels einer Klebemasse angeklebt. Danach wird die aus Ableitdraht und Glasstab mit anliegenden Drähten bestehende Baueinheit in eine Glashülle eingelegt, deren Innendurchmesser dem des Glasstabes mit dem angeklebten Elektrodendrähten entspricht. In der Folge wird das Glasrohrende mit dem Glasstab verschmolzen, sodaß die feinen Elektrodendrähte völlig vom Glas ummantelt sind. Dabei ist es jedoch erforderlich, die Abmessungen der einzelnen Bauteile sehr genau aufneinander abzustimmen, um bei der Bearbeitung auftretende Dehnund Schrumpfprozesse derart zu kompensieren, daß die feinen Drähte nicht beschädigt werden. Abschließend wird unter dem Mikroskop jene Stelle der Elektrodenspitze aufgesucht, an welcher die eingeschmolzenen Drähte am gleichmäßigsten verteilt sind und die Elektrode an dieser Stelle abgeschnitten. Nachteilig an dieser Innenelektrode ist das äußerst aufwendige Herstellungsverfahren, bei welchem hohe Ausschlußraten und dadurch auch hohe Kosten entstehen.

Die US-PS 3 700 580 zeigt einen elektrochemischen Sensor, bei dem die Innenelektrode durch einen Draht gebildet ist, der mit einem Ableidraht verbunden ist, wobei der Draht samt der Verbindungsstelle in Epoxi-Harz eingegossen ist. Eine ähnliche Ausführung ist auch aus der GB-PS 2 114 304 bekannt.

Aufgabe der vorliegenden Erfindung ist es, eine Innenelektrode der eingangs beschriebenen Art vorzuschlagen, welche ohne Einschränkung der Meßempfindlichkeit einfacher hergestellt werden kann.

Diese aufgabe wird erfindungsgemäß dadurch gelöst, daß die Drähte und deren Verbindungsstelle mit dem Ableitdraht in an sich bekannter Weise in eine den Stirnbereich der Hülle ausfüllende Kunststoffmasse eingegossen sind und daß die Hülle, bezogen auf den oberflächenseitigen Innendurchmesser, eine zwischen der Verbindungsstelle und der reaktiven Oberfläche liegende Querschnittsverengung aufweist, an welcher die Drähte anliegen und im wesentlichen parallel zur Achse der Hülle ausgerichtet sind.

Ein erfindungsgemäßes Verfahren zur Herstellung, einer derartigen Innenelektrode zeichnet sich dadurch aus, daß der Ableitdraht samt den wegstehenden Drahtenden am freien Ende des Absleitdrahtes in die Hülle gezogen wird, sodaß diese an der Querschnittsverengung der Hülle anliegen und im wesentlichen parallel zur Achse der Hülle ausgerichtet werden, daß der Stirnbereich der Hülle in an sich bekannter Weise mit einer Kunststoffmasse ausgegossen wird, sowie daß die Stirnfläche nach dem Aushärten der Kunststoffmasse einer die Querschnittsflächen der Drahtenden freilegenden Bearbeitung (z.B Schleifen) unterzogen wird. Dadurch wird auf einfache Weise erreicht, daß die feinen Elektrodendrähte möglichst porenfrei in die Gießmasse eingegossen sind und nicht im Übergangsbereich zwischen Hüllmaterial und Kunststoffmasse zu liegen kommen.

Prinzipiell können nach dem beschriebenen KunststoffGießverfahren alle Elektroden hergestellt werden, die nach den amperometrischen Prinzip arbeiten. Dies sind u.a. Elektroden zur Messung von $O_2$, Glucose, Lactat u.s.w.

Eine vorteilhafte Anwendung ist besonders dort gegeben, wo die zu messende Substanz (beispielsweise Sauerstoff) verbraucht wird und nur kleine Porbenvolumina vorhanden sind.

Eine vorteilhafte Verbindung zwischen Ableitdraht und den in der reaktiven Oberfläche endenden Drähten wird dadurch erreicht, daß zwei Drähte die freien Enden eines Drahtstückes bilden und der Ableitdraht an der Verbindungsstelle zum Drahtstück eine Flachstelle aufweist, welche das Drahtstück hakenförmig umfaßt. Es sind natürlich auch Löt- oder Klebeverbindungen zwischen dem Ableitdraht und den feinen Drähten möglich.

Weiters ist es von Vorteil, wenn die Hülle der Innenelektrode einen Absatz aufweist, an welchem die Flachstelle des Ableitdrahtes anliegt. Vorteilhafterweise kann dadurch beim Einsetzen der feinen Drähte in die Hülle der Ableitdraht ohne genaues Justieren bis zu einem Anschlag eingezogen werden.

Erfindungsmäß kann die Hülle der Elektrode aus Glas, Keramik oder Kunststoff, die Kunststoffmasse aus einem Epoxy-Harz (wie an sich bekannt), Polyester oder flüssigen Polymethylmethacrylat und die Drähte aus einem Edelmetall, einer Edelmetall-Legierung oder aus Carbonfasern bestehen. Neben Glas oder Keramit kann somit die isolierende Hülle ein mechanisch oder im Spritzgußverfahren herstellbarer Kunststoffteil sein, wobei sich alle Materialien eignen, die eine ausreichende Bindung mit der Gießmasse eingehen. Als Drahtmaterialien eignen sich vor allem Gold, Platin, Silder, Iridium sowie Carbonfasern, wobei - durch Verwendung einer Kunstoff-Gießmasse - auch Drahtmaterialien möglich sind, die in Glass nicht eingeschmolzen werden können.

An Anforderungen an die Gießmasse sind vor allem geringe Schrumpfverluste beim Aushärten, gute Haftung sowohl an den Drähten als auch am Hüllmaterial, gute Isolation, geringe Wasserraufnahme, geringe Gasdurchlässigkeit sowie gute mechanische Bearbeitbarkeit zu nennen. Ein weiterer Vorteil der erfindungsgemäßen Innenelektrode liegt im äußerst preisgünstigen Herstellungsverfahren.

Die Erfindung wird im folgenden anhand von Zeichnungen näher erläutert. Es zeigen:

Fig. 1 eine Innenelektrode einer polarographischen Elektrode nach der Erfindung in einer Schnittdarstellung,

Fig. 2 eine polarographische Elektrode mit einer Innenelektrode nach Fig 1, sowie die

Fig. 3 und 4 Details aus dem Herstellungsverfahren.

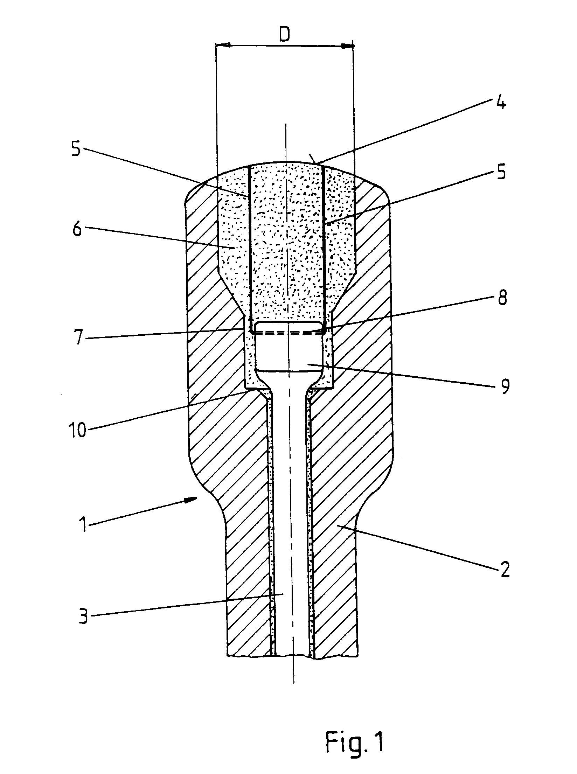

Die in Fig. 1 dargestellte Innenelektrode 1 weist eine elektrisch isolierende Hülle 2 auf, welche einen Ableitdraht 3 umschließt. Die reaktive Oberfläche 4 der Elektrode 1 wird durch die freien Querschnittsflächen der Drähte 5 gebildet, welche mit dem Ableitdraht 3 in elektrisch leitender Verbindung stehen. Die Drähte 5 und deren Verbindungsstelle mit dem Ableitdraht 3 sind in eine den Stirnbereich der Hülle 2 ausfüllende Kunststoffmasse 6 eingegossen.

Der Innendruchmesser D der Hülle 2 weist eine Querschnittverengung 7 auf, an welcher die Drähte 5 beim Einsetzten des Ableitdrahtes 3 anliegen und zur reaktiven Oberfläche 4 ausgerichtet werden.

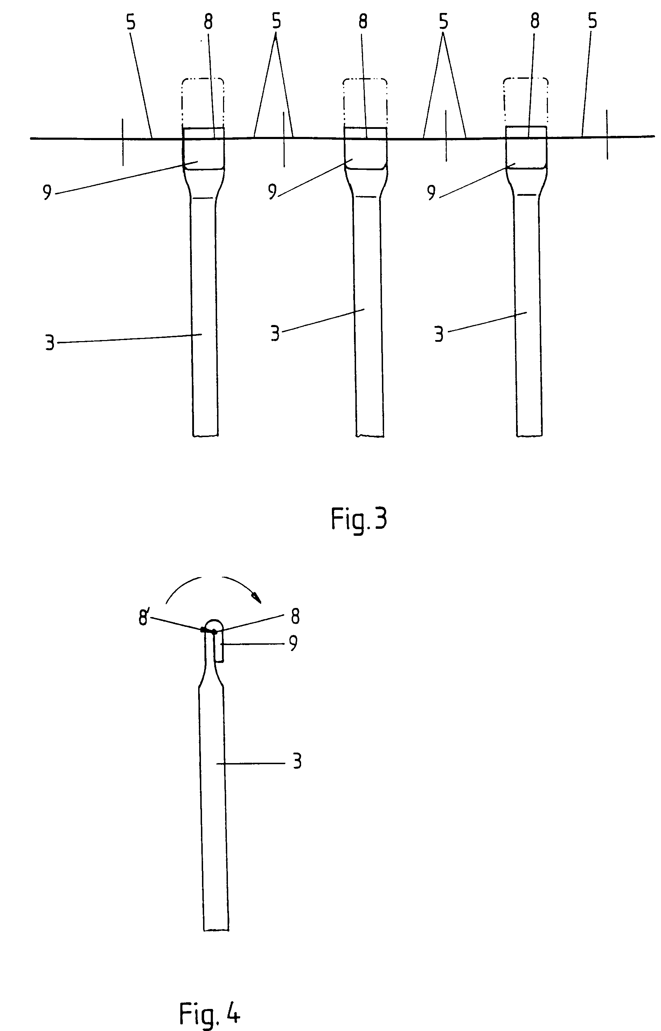

Bei der in Fig. 1 dargestellten bzw. in den Fig. 3 und 4 in einigen Details veranschaulichten Befestigungslösung werden zuerst mehrere Ableitdrähte 3 aus Schaltdraht, z.B. aus Kupfer blank, verzinkt, versilbert oder aus Silber, mit einem Durchmesser von ca. 0,5 mm zugeschnitten und an einem Ende kalt verformt, sodaß eine Flachstelle 9 von ca. 1 mm Breite entsteht. Die Ableitdrähte 3 werden mit ihren Flachstellen 9 mit Abstand aneinandergereiht, sodaß ein feiner Draht, z.B. aus Platin, mit einem Durchmesser zwischen 5 und 50 µm über die Flachstellen 9 gelegt werden kann (Fig. 3). Danach werden die Flachstellen 9 hakenförming umgeschlagen, wobei der Platindraht umfaßt und festgehalten wird. Der Platindraht wird nun jeweils zwischen zwei Ableitdrähten abgeschnitten, sodaß jeder Ableitdraht 3 ein Drahtstück 8 festklemmt, dessen im wesentlichen im rechten Winkel abstehenden freien Enden die Drähte 5 bilden. Die Leitfähigkeit der Verbindungsstelle zwischen Ableitdraht 3 und Drahtstück 8 kann durch einen Tropfen Leitkleber (Pfeil 8') erhöht werden (Fig. 4).

Der Ableitdraht 3 wird anschließend an seinem freien Ende in die Hülle 2 gezogen, bis seine Flaschstelle 9 an einem Absatz 10 der Hülle 2 anliegt, wobei die Drahtenden bzw. Drähte 5 durch die Querschnittsverengung 7 in Richtung reaktive Oberfläche 4 ausgerichtet werden. Der Stirnbereich der Hülle 2 wird nun mit einer Kunststoffmasse 6 ausgegossen. Nach dem Aushärten werden überstehende Teile der Kunststoffmasse mechanisch, beispielsweise durch Schleifen, entfernt und die Oberfläche poliert.

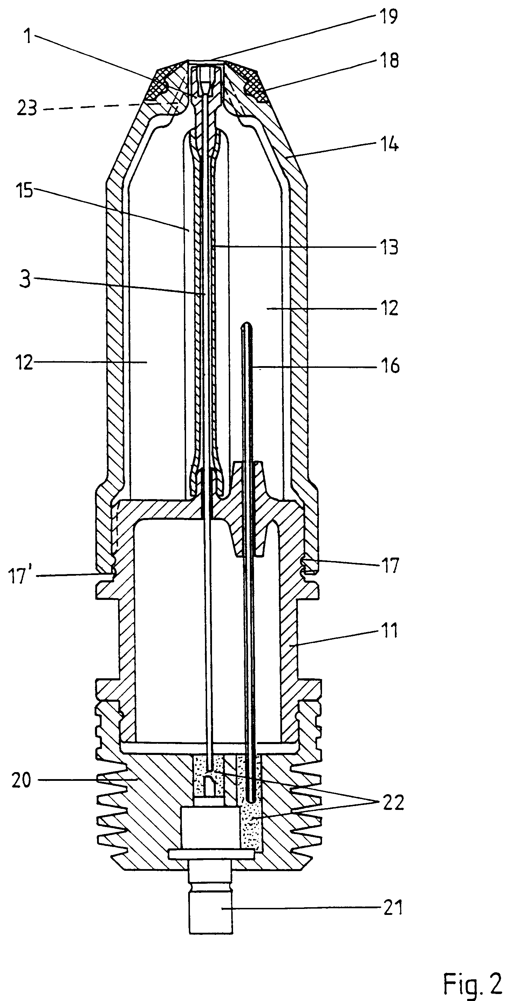

Fig. 2 zeigt eine polarographische Elektrode mit eingesetzter Innenelektrode 1, welche durch am Elektrodenkörper 11 angeformte Rippen 12 gehalten wird. Zwischen dem Elektrodenkörper 11 und der Innenektrode 1 wird der Ableitdraht 3 von einem elastichen Schlauch 13 umgeben und elektrisch isoliert. In den durch ein Gehäuse 14 gebildeten, elektrolytgefüllten Innenraum 15 der polarographischen Elektrode, ragt ein vom Elektrodenkörper 11 gehaltener Silberstift als Referenzelektrode 16. Temperatur- und konstruktionsbedingte Ausdehnungen z.B. der Luft im Elektrolytraum werden durch den elastichen Schlauch 13 kompensiert.

Das Gehäuse 14 wird über zwei Rasterstellungen 17, 17' am Elektrodenkörper 11 gehalten und weist an der Durchtrittsstelle für die Innenelektrode 1 eine weiche Kappe 18 auf, welche eine für die Meßsubstanz selektive Membran 19 trägt. Die angeformten Rippen 12 greifen in Ausnehmungen 23 des Gehäuses 14 ein, sodaß dieses nicht verdreht werden kann und somit die Membran 19 nicht zusätzlich belastet wird. Die Kappe 18 hat dabei die Funktion der Membranhalterung und dient zusätzlich als Dichtung gegenüber einer Meßkammer.

Beim Einsetzen der Elektrode in eine Meßkammer wird das Gehäuse 14 in die zweite Rasterstellung 17' gedrückt und erst dadurch die Membran 19 auf die Innenelektrode 1 gespannt, dadurch wird deren Lebensdauer durch den effektiven Einsatz in der Meßkammer bestimmt und somit wesentlich verlängert. Der durch das Einsetzen entstehende leichte Überdruck wird ebenfalls durch den elastischen Schlauch 13 kompensiert.

Am von der Innenelektrode 1 abgewandten Ende, weist die polarographische Elektrode eine Steckerkappe 20 mit integriertem Stecker 21 auf, wobei die elektrische Verbindung zum Ableitdraht 3 einerseits und zur Referenzelektrode 16 andererseits über Leitkleberverbindungen 22 hergestellt ist.

**Patentansprüche**

1.  Innenelektrode einer polarographischen Elektro-

de mit einer elektrisch isolioreden Hülle, welche einen Ableitdraht aufnimmt und an der Stirnfläche eine reaktive Oberfläche aufweist, die durch die freien Querschnittsflächen von in der Hülle angeordneten, mit dem Ableitdraht in elektrisch leitender Verbindung stehenden Drähten gebildet ist, **dadurch gekennzeichnet**, daß die Drähte (5) und deren Verbindungsstelle mit dem Ableitdraht (3) in an sich bekannter Weise in eine den Stirnbereich der Hülle (2) ausfüllende Kunststoffmasse (6) eingegossen sind und daß die Hülle (2), bezogen auf den oberflächenseitigen Innendurchmesser (D), eine zwischen der Verbindungsstelle und der reaktiven Oberfläche (4) liegende Querschnittsverengung (7) aufweist, an welcher die Drähte (5) anliegen und im wesentlichen parallel zur Achse der Hülle (2) ausgerichtet sind.

2. Elektrode nach Anspruch 1, **dadurch gekennzeichnet,** daß zwei Drähte (5) die freien Enden eines Drahtstückes (8) bilden und der Ableitdraht (3) an der Verbindungsstelle zum Drahtstück (8) eine Flachstelle (9) aufweist, welche das Drahtstück (8) hakenförming umfaßt.

3. Elektrode nach Anspruch 2, **dadurch gekennzeichnet,** daß die Hülle (2) einen Absatz (10) aufweist, an welchem die Flaschstelle (9) des Ableitdrahtes (13) anliegt.

4. Elektrode nach einem der Ansprüche 1 bis 3, **dadurch gekennzeichnet,** daß die Hülle (2) der Elektrode (1) aus Glas, Keramik oder Kunststoff, die Kunststoffmasse (6) aus einem Epoxy-Hartz (wie an sich bekannt), Polyester oder flüssigem Polymethymethacrylat und die Drähte (5) aus einem Edelmetall, einer Edelmetall-Legierung oder aus Carbonfasern bestehen.

5. Verfahren zur Herstellung einer Innenelektrode einer polarographischen Elektrode nach einem der Ansprüche 1 bis 4, wobei zumindest ein Draht an einem Ende eines Ableitdrahtes so befestigt wird, daß die Drahtenden auf die Achse des Ableitdrahtes im wesentlichen normal stehen, **dadurch gekennzeichnet**, daß der Ableitdraht (3) samt den wegstehenden Drahtenden (5) an freien Ende des Ableitdrahtes in die Hülle (2) gezogen wird, sodaß diese an der Querschnittsverengung (7) der Hülle (2) anliegen und im wesentlichen parallel zur Achse der Hülle (2) ausgerichtet werden, daß der Stirnbereich der Hülle in an sich bekannter Weise mit einer Kunststoffmasse ausgegossen wird, sowie daß die Stirnfläche nach dem Aushärten der Kunststoffmasse einer die Querschnittsflächen der Drahtenden freilegenden Bearbeitung (z.B. Schleifen) unterzogen wird.

Fig.1

Fig. 2

Fig. 3

Fig. 4